(19) Europäisches Patentamt
European Patent Office
Office européen des brevets

(11) **EP 1 871 124 B1**

(12) **EUROPEAN PATENT SPECIFICATION**

(45) Date of publication and mention
of the grant of the patent:
**06.07.2011 Bulletin 2011/27**

(51) Int Cl.:
***H04W 16/04*** *(2009.01)*

(21) Application number: **07108868.6**

(22) Date of filing: **24.05.2007**

(54) **Band allocation method and radio communication system**

Bandzuordnungsverfahren und Funkkommunikationssystem

Procédé d'attribution de bande et système de communication radio

(84) Designated Contracting States:
**DE FI FR GB IT SE**

(30) Priority: **19.06.2006 JP 2006168722**

(43) Date of publication of application:
**26.12.2007 Bulletin 2007/52**

(73) Proprietor: **NEC Corporation**
**Minato-ku**
**Tokyo 108-8001 (JP)**

(72) Inventors:
• **Oketani, Kengo**
**Tokyo 108-8001 (JP)**
• **Kakura, Yoshikazu**
**Tokyo 108-8001 (JP)**
• **Ushirokawa, Akihisa**
**Tokyo 108-8001 (JP)**

(74) Representative: **Vossius & Partner**
**Siebertstrasse 4**
**81675 München (DE)**

(56) References cited:
**US-A1- 2004 066 802     US-A1- 2005 233 752**

• **LIN HUANG ET AL: "Channel Estimation Based on Delay-Subspace Filter for Uplink of CDM-OFDMA System" MICROWAVE, ANTENNA, PROPAGATION AND EMC TECHNOLOGIES FOR WIRELESS COMMUNICATIONS, 2005. MAPE 2005. IEEE INTERNATIONAL SYMPOSIUM ON BEIJING, CHINA 08-12 AUG. 2005, PISCATAWAY, NJ, USA, IEEE, 8 August 2005 (2005-08-08), pages 1415-1418, XP010909281 ISBN: 0-7803-9128-4**

# EP 1 871 124 B1

## Description

The present invention relates to a technique for dividing and allocating a system band to users in a radio communication system.

At present, in the 3GPP, a next generation mobile communication system has been examined as a 3GPP-LTE (Long Term Evolution). As a wireless access method for up-link in the 3GPP-LTE system, a single carrier transmission method is important (refer to 3GPP TR 25.814 v1.5.0 (2006-05)). It is assumed that a system band (1.25 to 20 MHz) is divided and allocated to a plurality of users, and each user transmits data in the single carrier transmission.

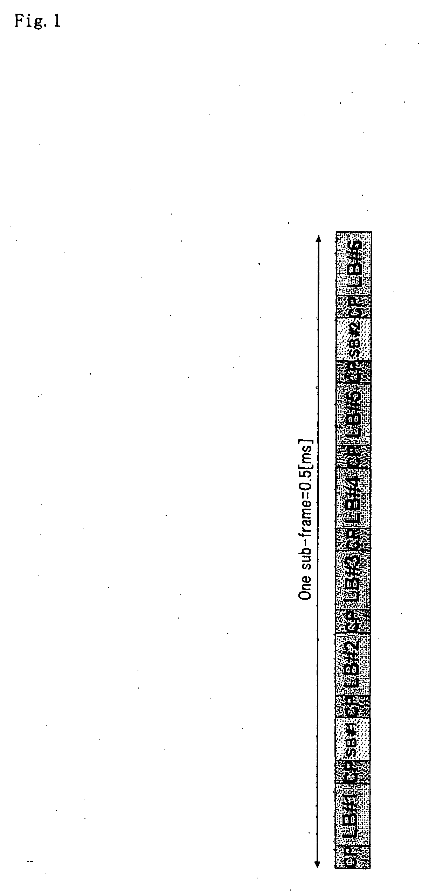

FIG. 1 is a diagram showing a frame format for use in a single carrier transmission method proposed in the 3GPP-LTE system. Referring to FIG. 1, two SBs (Short Block) and six LBs (Long Block) are included in a sub-frame of 0.5 msec. It is assumed that SB is used for transmission of a pilot signal, and LB is used for transmission of a data signal.

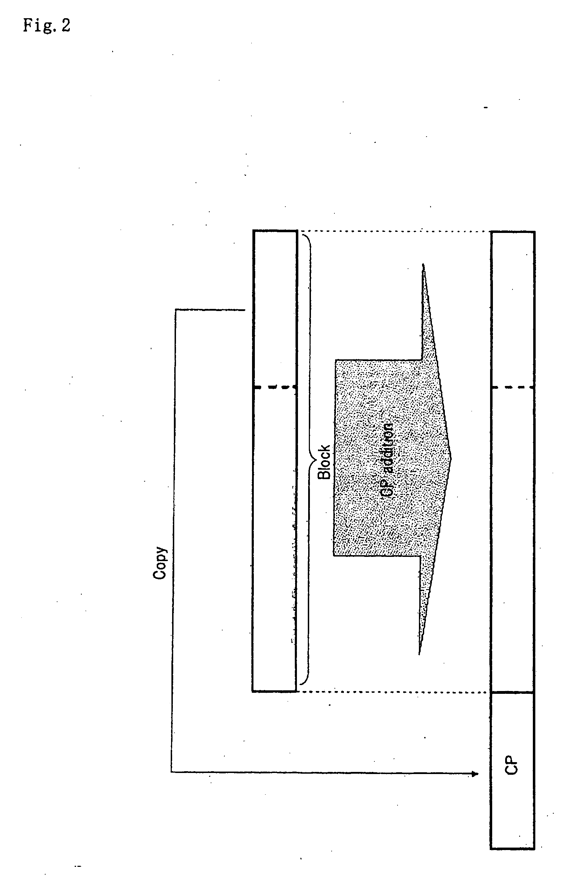

A CP (Cyclic Prefix) for making the frequency domain equalization on the receiving side effectively is provided between blocks. FIG. 2 is a view for explaining the CP. As shown in FIG. 2, data in the rear part of each block is copied and added as the CP before the block.

Also, in the 3GPP-LTE system, it is assumed that the system band is divided and allocated to a plurality of users. The division pattern is not unique, but various division patterns are assumed. The user (mobile station) transmits the pilot signal in the band allocated in accordance with the division pattern.

For the pilot signal in the 3GPP-LTE system, a Zadoff-Chu sequence that is one of the CAZAC (Constant Amplitude Zero Auto-Correlation) sequence has gained attention (refer to K. Fazel and S. Keiser, "Multi-Carrier and Spread Spectrum Systems," John Willey and Sons, 2003). The Zadoff-Chu sequence is represented by formula (1). In formula (1), N denotes the sequence length, n=0, 1, ..., N, and q is any integer.

$$C\_k(n) = \exp\left[-\frac{j2\pi k}{N}\left(n\frac{n+1}{2}+qn\right)\right] \qquad (1)$$

This CAZAC sequence has a constant amplitude (Constant Amplitude) in both the time and frequency domains, and the periodic auto-correlation value is always zero for a time lag other than 0 (Zero Auto-Correlation).

If the amplitude is constant in the time domain, the PAPR (Peak to Average Power Ratio) can be suppressed. If the PAPR is suppressed, the power consumption is lowered. Since the CAZAC sequence can suppress this PAPR, the power consumption of the mobile station can be lowered, whereby the CAZAC sequence is particularly suitable for the mobile communication which high demands for lower power consumption of the mobile station.

Also, if the amplitude is constant in the frequency domain, the propagation path is easily estimated in the frequency domain. Therefore, the CAZAC sequence with constant amplitude in the frequency domain is suitable for the mobile communication to estimate the propagation path.

Also, if the auto-correlation characteristic is excellent, the timing of received signal is easily detected. The CAZAC sequence having the complete auto-correlation characteristic is suitable for the mobile communication that detects the timing from the auto-correlation characteristic.

However, the above techniques have the following problems.

In the 3GPP-LTE system as described above, it is assumed that the system band is divided and allocated to a plurality of users, and a plurality of division patterns are assumed. At each base station, an appropriate division pattern among the plurality of division patterns is decided and applied.

There are various factors for deciding which division pattern is appropriate. For example, there are factors such as a tendency of the band requested by the mobile station within each cell, a scheduling algorithm for giving a transmission permission to the mobile station, a difference in the received signal quality due to distance from the base station, and interference between cells with the cross-correlation characteristic. If the division pattern suitable for each base station is applied in consideration of all these factors, it is thought that the communication environment favorable for the mobile station within the cell can be provided.

However, for the 3GPP-LTE system, no full examination as to how the division pattern of each base station is decided is made at the present stage. Therefore, in the current situation, it is not necessarily said that the communication environment favorable for the mobile station can be provided.

US 2005/0233752 A discloses a method for implementing a phased deployment of a communication system. The document deals with how to allocate carriers to sectors or cells as the number of service subscribers increases. On the other hand, the risk of interference is reduced by transmitting signals on different carriers using different power levels in a given sector.

L. Huang et al. "Channel Estimation Based on Delay-Subspace Filter for Uplink of CDM-OFDMA System",

2

2005 IEEE, International Symposium on Microwave, Antenna, Propagation and EMC Technologies for Wireless Communications Proceedings, pages 1415-1418 shows an OFDMA system structure in which a band is allocated to a mobile station to transmit a signal including a pilot and user data.

An object of the present invention is to provide a radio communication system for dividing and allocating a system band to the user, in which the system band is divided according to an appropriate division pattern.

In order to accomplish the above object, the present invention provides a band allocation method for dividing and allocating a system band of each cell according to the features of claim 1.

Further, there is provided a system according to the features of claim 9.

With the invention, since the same division pattern is instructed to the base stations belonging to the predetermined area, and each base station divides the pilot transmission frequency band in accordance with the instructed division pattern, the system band can be divided according to the appropriate division pattern. As a result, the interference of the pilot signal between cells can be reduced.

Further embodiments are according to the dependent claims.

The above and other objects, features, and advantages of the present invention will become apparent from the following description with references to the accompanying drawings which illustrate examples of the present invention.

BRIEF DESCRIPTION OF THE DRAWINGS

FIG. 1 is a diagram showing a frame format for use in a single carrier transmission method proposed in a 3GPP-LTE system;

FIG. 2 is a view for explaining a CP;

FIG. 3 is a block diagram showing a mobile communication system according to a first embodiment of the invention;

FIG. 4 is a typical view showing the transmission and reception of an up-stream signal in the mobile communication system;

FIG. 5 is a view showing an example in which the pilot transmission bands are matched between two cells;

FIG. 6 is a view showing an example in which the pilot transmission bands are unmatched between two cells;

FIG. 7 is a view showing another example in which the pilot transmission bands are unmatched between two cells;

FIG. 8 is a view showing an example in which the division patterns of pilot transmission frequency band are unmatched between two cells;

FIG. 9 is a view showing an example in which the division patterns of pilot transmission frequency band are matched between two cells;

FIG. 10 is a view showing one example of predetermined division patterns in the first embodiment;

FIG. 11 is a view showing the generation of orthogonal code for use in a CDM pilot multiplex method;

FIG. 12 is a view showing one example of predetermined division patterns in a second embodiment;

FIG. 13 is a view showing one example of predetermined division pattern in a third embodiment;

FIG. 14 is a view showing one example of predetermined division patterns in a fourth embodiment; and

FIG. 15 is a view showing one example of predetermined division patterns in a fifth embodiment.

DETAILED DESCRIPTION OF THE PREFERRED EMBODIMENTS

The embodiments for carrying out the present invention will be described below in detail with reference to the drawings.

(First embodiment)

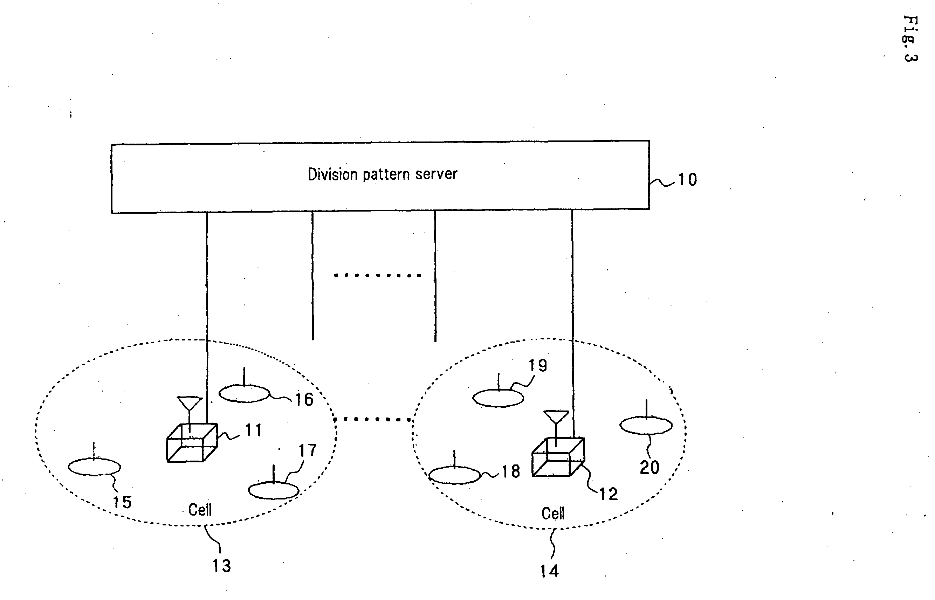

FIG. 3 is a block diagram showing a mobile communication system according to a first embodiment of the invention. Referring to FIG. 3, the mobile communication system of the first embodiment has a division pattern sever 10 and a plurality of base stations 11, 12. Base stations 11, 12 are connected to division pattern server 10. Base station 11 constructs a cell 13, and base station 12 constructs cell 14. Mobile stations 15 to 17 exist within cell 13, and mobile stations 18 to 20 exist within cell 14.

In this embodiment, a service area is configured on a cell basis, but the cell may be further divided into sectors. In this case, the cell may be reread as the sector in the description of this embodiment. Though division pattern server 10 exists separately from base stations 11, 12 in this embodiment, the function of division pattern server 10 may be incorporated into any base station for integration.

Division pattern server 10 receives a desired division pattern notification from plural base stations 11, 12, decides a pilot transmission frequency band division pattern of each base station 11, 12 and dictates a division pattern of pilot transmission frequency band to each base station 11, 12. The desired division pattern notification is a message for notifying the division pattern desired by base station 11, 12 from base station 11, 12 to division pattern server 10, including an index indicating the desired division pattern. An up-link is given a predetermined system band. The division pattern indicates how to divide the system band for use. An instruction of the division pattern includes the index indicating the division pattern and change timing information indicating the timing of changing the division pattern.

Division pattern server 10 uses the same division pattern for plural base stations 11, 12 in a predetermined range and tries to give the desired division pattern to each base station 11, 12 if possible, in deciding the division pattern of pilot transmission frequency for each base station 11, 12. For example, the division pattern desired by the largest number of base stations 11, 12 among the division patterns desired from base stations 11, 12 in the predetermined range may be given to all base stations 11, 12 in the predetermined range.
The range for allocating the same division pattern can be set beforehand.

Base station 11, 12 selects the division pattern suitable for the self cell, based on a band allocation request received from each mobile station within the self cell, and notifies it as a desired division pattern notification to division pattern server 10. The band allocation request includes band information requested by the mobile station (request band information).

For example, base station 11, 12 tallies up request band information included in the band allocation requests received from the mobile stations for a fixed period. And from the tally result, base station 11, 12 decides the division pattern capable of allocating the band as requested to the largest possible mobile stations and notifies it to division pattern server 10.

Also, base station 11, 12 stores the division pattern dictated from division pattern server 10, and divides the system band according to its division pattern. And base station 11, 12 allocates any of the pilot transmission frequency bands divided according to the dictated division pattern to the mobile station that sends the band allocation request. Specifically, the division pattern may be changed at the designated timing in accordance with the index and change timing information included in the instruction of the division pattern.

Mobile stations 15 to 20 transmit, as a pilot signal, the CAZAC sequence of predetermined sequence length conforming to the pilot transmission frequency band allocated from base station 11, 12. Thereby, the pilot signal transmitted at the same timing and at the same frequency is the CAZAC sequence having the same sequence length, whereby the cross-correlation is suppressed.

Next, a method for allowing division pattern server 10 to decide the pilot transmission frequency division pattern of each base station 11,12 will be described below in detail.

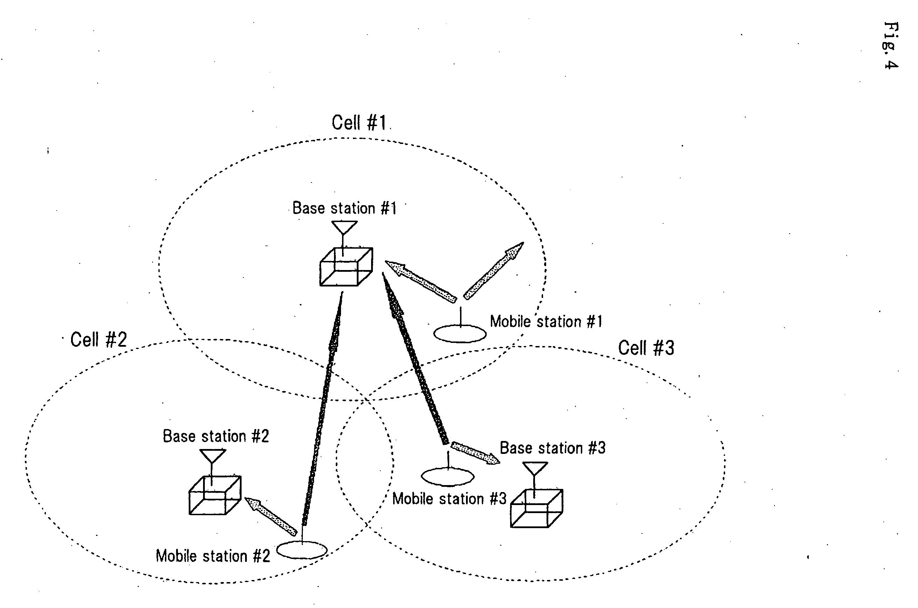

FIG. 4 is a typical view showing the transmission and reception of an up-stream signal in the mobile communication system. In a cellular environment where the service area is divided into two or more cells, as shown in FIG. 4, a received signal of up-link in base station contains an up-stream signal from mobile station in another cell (particularly adjacent cell), mingled with an up-stream signal from mobile station within the self cell. In FIG. 4, the up-stream signals from mobile station #2 in cell #2 which is constructed by base station #2 reach not only base station #2 but also base station #1. Also, the up-stream signals from mobile station #3 in cell #3 which is constructed by base station #3 reach not only base station #3 but also base station #1. These may cause interference between cells.

Accordingly, in order that base station excellently captures the pilot signal from mobile station within the self cell at the up-link, it is desired to sufficiently suppress the pilot signal transmitted from mobile station in another cell. To suppress the pilot signal from mobile station in another cell, it is preferred to use the pilot sequence having small cross-correlation value at each base station. In this embodiment, the up-link is noticed, but the same thing can be said for the down-link.

As described above, in the 3GPP-LTE system, it is favorable that the CAZAC sequence is used as the pilot sequence. In this embodiment, the CAZAC sequence is used as the pilot sequence.

The cross-correlation characteristic of the CAZAC sequence greatly depends on the sequence length. In the CAZAC sequence, if the sequence length is equal, the cross-correlation characteristic is excellent, but if the sequence length is different, it is typically worse.

Also, in the CAZAC sequence, if the sequence length is prime number or includes a large prime number, the cross-correlation characteristic is very excellent. That is, the cross-correlation value is small. Conversely, if the sequence length number is a composite number of small prime numbers only (e.g., number to the power of 2 or 3), the cross-correlation characteristic is greatly worse. That is, the cross-correlation value includes a large value.

More specifically, if the sequence length of the Zadoff-Chu sequence (the sequence length is denoted as "N") is prime number, the cross-correlation value of any sequence is always kept at $1/\sqrt{N}$. For example, if the sequence length N is equal to 127 (prime number), the cross-correlation value is always $1/\sqrt{127}$. On the contrary, if the sequence length N is equal to 128 ($2^7$), the worst value (maximum value) of the cross-correlation value is $1/\sqrt{2}$. Also, in view of the number of sequence, if the sequence length N is prime number, there is an abundance of (N-1) sequence where the cross-correlation value is $1/\sqrt{N}$.

Therefore, from the viewpoint of the cross-correlation characteristic, it is proposed that the CAZAC sequence in which the sequence length is prime number and equal between cells and the parameter (q in formula (1)) is different for each cell is given as the pilot sequence to each cell. Further, since the (N-1) sequence with small cross-correlation can be taken by making such allocation, the pilot sequence may be reused for every (N-1) cells to repeat the pilot sequence for (N-1) cells.

Also, the pilot sequence length is coincident with the number of sub-carriers allocated to each mobile station, and the number of allocated sub-carriers is proportional to the allocated frequency bandwidth. That is, the pilot sequence length is proportional to the allocated frequency bandwidth. Accordingly, to reduce the cross-correlation between pilot sequence, it is required that the pilot sequence length (frequency bandwidth) is made equal between cells to fully match the pilot transmission bands.

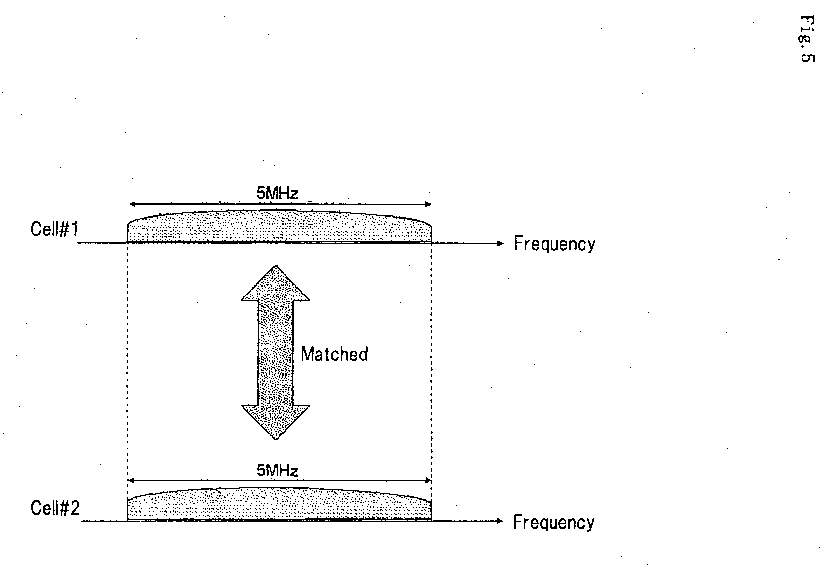

FIG. 5 is a view showing an example in which the pilot transmission bands are matched between two cells. Referring to FIG. 5, the pilot transmission bandwidth of cell #1 and the pilot transmission bandwidth of cell #2 are both 5 MHz, and their pilot transmission bands are fully matched on the frequency axis. In this case, the cross-correlation between cell #1 and cell #2 is smaller.

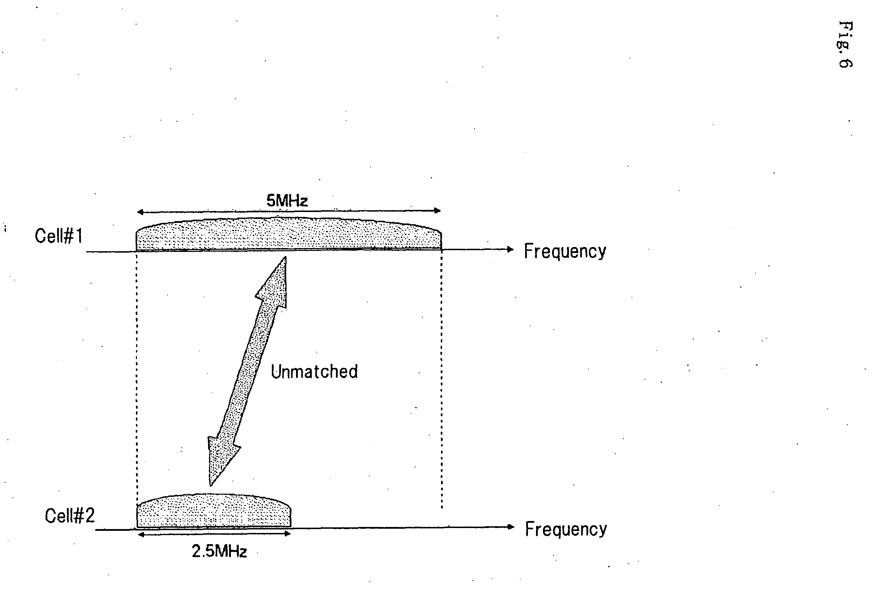

FIG. 6 is a view showing an example in which the pilot transmission bands are unmatched between two cells. Referring to FIG. 6, the pilot transmission bandwidth of cell #1 is 5 MHz while the pilot transmission bandwidth of cell #2 is 2.5 MHz. Therefore, their pilot transmission bands are not fully matched on the frequency axis. In this case, the cross-correlation between cell #1 and cell #2 is larger.

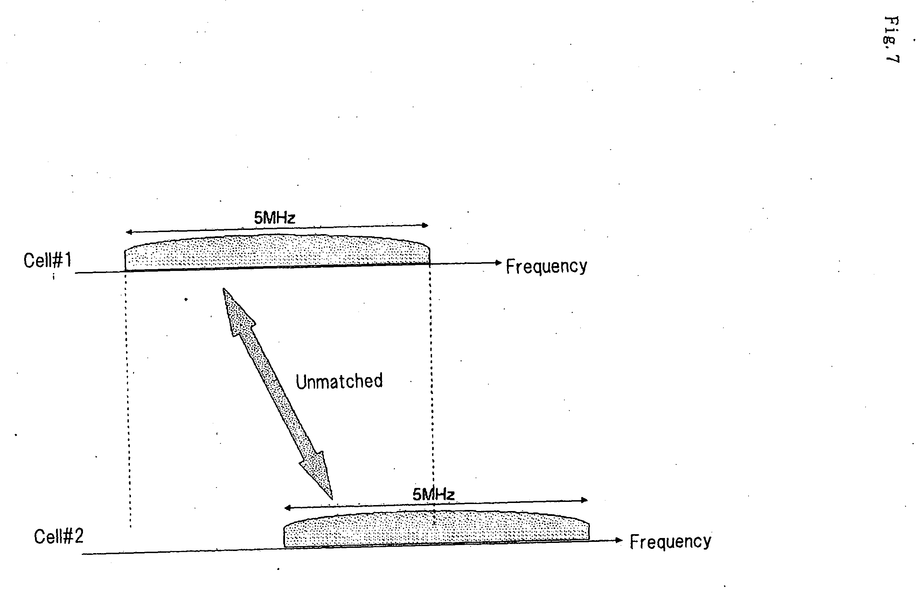

FIG. 7 is a view showing another example in which the pilot transmission bands are unmatched between two cells. Referring to FIG. 7, the pilot transmission bandwidth of cell #1 and the pilot transmission bandwidth of cell #2 are both 5 MHz, but their pilot transmission bands are not fully matched on the frequency axis. In this case, the cross-correlation between cell #1 and cell #2 is larger.

In the 3GPP-LTE, the system band (1.25 to 20 MHz) is divided into plural sub-bands. And each of the divided frequency bands becomes the pilot transmission frequency band of mobile station. If the division patterns are different between cells, the pilot transmission bands may be different on the frequency axis. Then, the cross-correlation is larger, so that the interference between cells is increased.

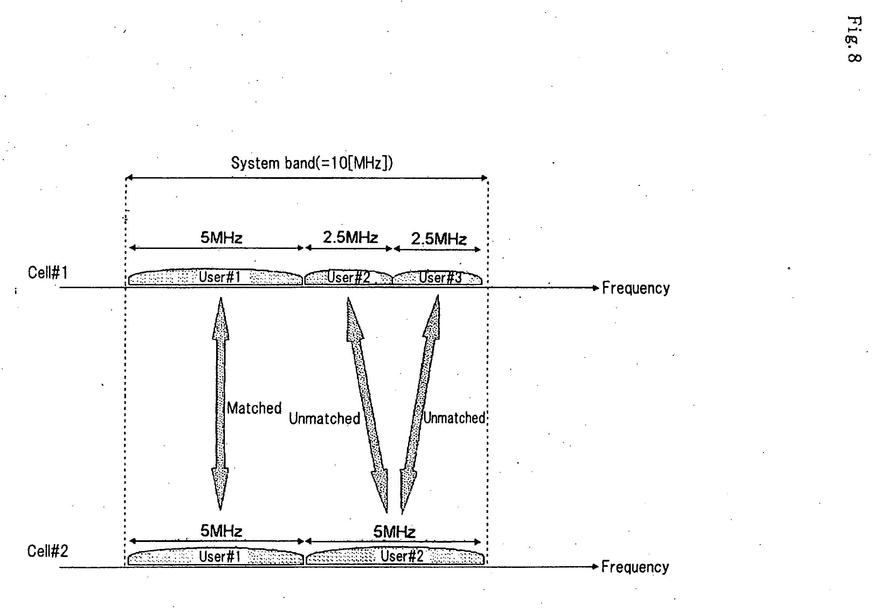

FIG. 8 is a view showing an example in which the division patterns of pilot transmission frequency band are unmatched between two cells.
Referring to FIG. 8, the system band of 10 MHz is divided into 5 MHz (user#1), 2.5 MHz (user #2) and 2.5 MHz (user#3) in this order in cell #1. On the other hand, the system band of 10 MHz is divided into 5 MHz (user #1) and 5 MHz (user #2) in this order in cell #1.

Since the pilot transmission frequency bands are fully matched between the user #1 of cell #1 and the user #1 of cell #2, the cross-correlation of the pilot sequence between the user #1 of cell #1 and the user #1 of cell #2 is suppressed, if the CAZAC sequence having the same prime number length is allocated to the pilot signal for each user.

However, since the pilot transmission frequency bands are not fully matched between the user #2 of cell #1 and the user #2 of cell #2, or between the user #3 of cell #1 and the user #2 of cell #2, the cross-correlation value can not be suppressed, even if the CAZAC sequence is allocated to the pilot signal. That is, the interference between cells is increased, resulting in poor characteristic.

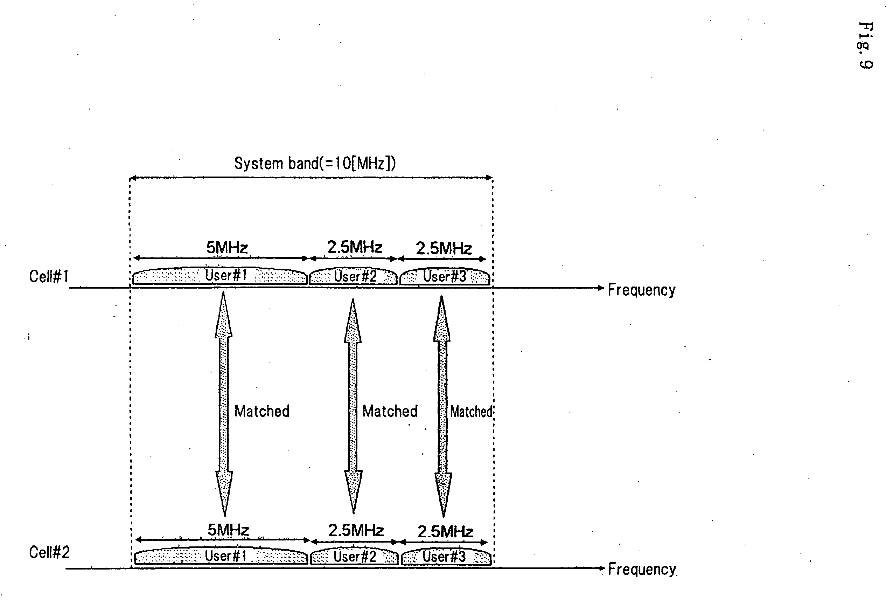

FIG. 9 is a view showing an example in which the division patterns of pilot transmission frequency band are matched between cells. Referring to FIG. 9, the system band of 10 MHz is divided into 5 MHz (user #1), 2.5 MHz (user #2) and 2.5 MHz (user #3) in this order in both cell #1 and cell #2. Therefore, since the pilot transmission frequency bands are fully matched between cell #1 and cell #2, the cross-correlation of the pilot sequence between cell #1 and cell #2 is suppressed, if the CAZAC sequence having the prime number length is allocated to the pilot signal for each user.

Thus, division pattern server 10 gives the same pilot transmission frequency division pattern to base stations 11, 12 in the predetermined range to make the sequence lengths (frequency bandwidth) of the pilot pattern and the frequency bands for base stations 11, 12 in that range consistent.

By giving the same pilot transmission frequency division pattern to base stations 11, 12 in the predetermined range, the cross-correlation value of pilot sequence between cells can be reduced in the predetermined range.

In the following, one method of deciding the predetermined range of base stations 11, 12 to be given the same division pattern will be described.

As described above, there are various factors for deciding the appropriate division pattern, including, for example, a tendency of the band requested by the mobile station within each cell, a scheduling algorithm for giving a transmission permission to the mobile station, a difference in the received signal quality due to distance from the base station, and interference between cells with the cross-correlation characteristic. Among others, the scheduling algorithm is supposedly common within the 3GPP-LTE system of this embodiment.

The tendency of the band requested by the mobile station within each cell and the difference in the received signal quality due to distance from the base station may belong to the properties of the cell caused by the communication use form of the user or the topography. Therefore, the cells having similar properties are supposedly placed in similar situation of these factors. For example, it is supposed that a plurality of cells adjacent to each other in the urban area have similar tendency of the band requested by the mobile station, and similar tendency of the difference in the received signal quality due to distance from the base station. Also, it is supposed that the cells adjacent to each other in the suburbs have similar tendency.

From the above description, in this embodiment, base stations 11, 12 constructing the adjacent cells having similar properties are defined as the predetermined range (group of base stations for matching division patterns).

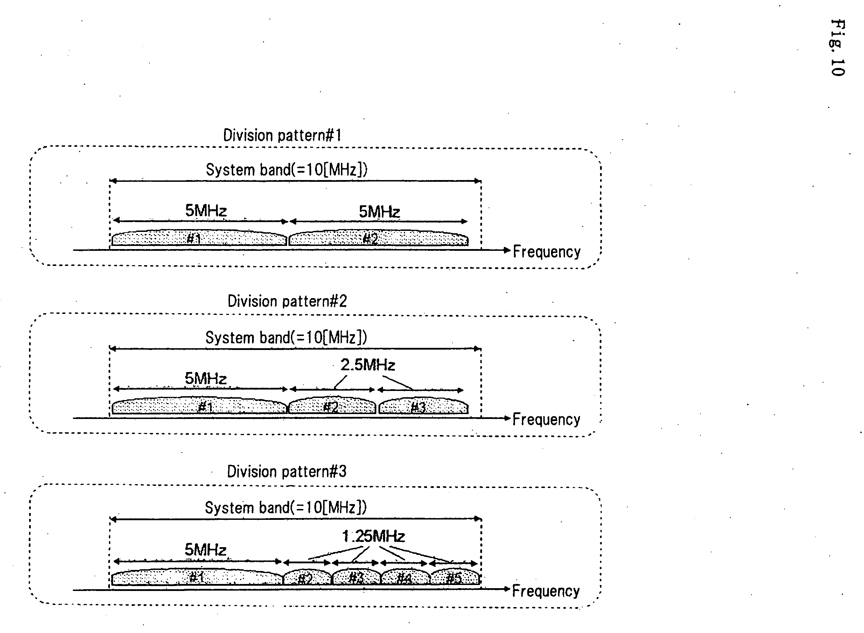

In this embodiment, a plurality of selectable division patterns are determined beforehand, and stored in base stations 11, 12 and division pattern server 10. FIG. 10 is a view showing one example of predetermined division patterns in the first embodiment. Referring to FIG. 10, three division patterns, division patterns #1 to #3, are prepared in this embodiment.

Base station 11, 12 selects the division pattern suitable for the self cell from them, and notifies it as a desired division pattern notification to division pattern server 10. Division pattern server 10 decides the division pattern suitable for the group of base stations, based on the desired division pattern notifications from plural base stations 11, 12 belonging to the group of base stations for making the division patterns consistent. And division pattern server 10 dictates the decided division pattern to all base stations 19, 12 belonging to the group of base stations.

For example, if the division pattern #1 is notified, each of base stations 11, 12 divides the system band of 10 MHz into halves such as pattern #1.

And base station 11, 12 allocates the band #1 and band #2 within one sub-frame of 0.5 msec to different mobile stations making a band allocation request. The mobile station allocated the pilot transmission frequency band transmits the pilot signal (or pilot signal and data signal) in its band.

As described above, with this embodiment, division pattern server 10 dictates the same division pattern to base stations 11,12 belonging to the predetermined range, and each of base stations 11, 12 divides the pilot transmission frequency band according to the dictated division pattern, whereby the system band can be divided according to the appropriate division pattern to reduce interference of the pilot signal between cells.

Also, with this embodiment, the same division pattern is applied to the cells within the predetermined range, and therefore the same division pattern can be applied to the adjacent cells having similar properties, so that there is low possibility that the division pattern unsuitable for the properties of each cell is applied by making the division patterns identical, and there is less harmful influence.

Also, with this embodiment, the division pattern applied commonly to the cells in the predetermined range can be appropriately selected, based on the desired division pattern notified from plural base stations 11, 12 in the predetermined range, whereby it is possible to reduce the interference between cells and provide the communication environment favorable for the mobile station accommodated in each cell.

Also, with this embodiment, plural division pattern candidates are decided beforehand, and the division pattern selected from them is applied commonly to plural base stations, whereby the division pattern applied to plural base stations can be easily decided.

In the 3GPP-LTE system, the scheduling algorithm for use in allocating the band of transmitting the data signal to the mobile station may be supposedly a general round robin, a PF (proportional fairness) method, or a Max C/I method. The invention is not necessarily limited to these scheduling algorithms.

Also, in this embodiment, one division pattern is selected from three division patterns as shown in FIG. 10, but the invention is not limited thereto. The division patterns to be prepared may not be three, and may be other than those shown in FIG. 10.

Also, if the division pattern once decided is not changed, it is unnecessary to prepare plural division patterns, and comprise division pattern server 10 in the system. For example, the same division pattern is stored beforehand in each of base stations 11, 12 in the predetermined range, and at the time of start-up, each base station may start the operation by applying the stored division pattern.

Also, with this embodiment, the division patterns given to base stations 11, 12 in the predetermined range are completely identical, but may not be completely identical. If the division patterns identical in a part of the system band are given, the interference between cells is reduced in the band where the same division patterns are given.

By the way, in the scheduling for deciding the mobile station to permit the transmission of up-stream data in the 3GPP, it is examined to periodically measure the CQI (Channel Quality Information) of up-link for plural mobile stations to implement the scheduling depending on the channel situation (channel-dependent scheduling) in both frequency and time domains. Also, it is examined to multiplex the control channels for plural terminals into one sub-frame.

Since the pilot signal is employed for the measurement of CQI, it is required to multiplex the pilot signals for plural mobile stations into the sub-frame to measure the CQI. The multiplexing methods have been proposed, such as an FDM pilot multiplexing method for implementing the orthogonality of the users in the frequency domain, a CDM pilot multiplexing method for implementing the orthogonality of the users in the code domain, and a Hybrid method that is a combination of the above two methods.

The FDM pilot multiplexing method involves dividing the band into plural comb teeth and allocating a different comb tooth to each user, and was proposed in "3GPP R1-060878, "EUTRA SC-FDMA Uplink Pilot/Reference Signal Design & TP", Motorola". Thereby, the orthogonality between users is implemented in the frequency domain.

The CDM pilot multiplexing method involves allocating the mutually orthogonal codes to the users, and was proposed in "3GPP R1-060925, "Comparison of Proposed Uplink Pilot Structures for SC-FDMA", Texas Instruments". Thereby, the orthogonality between users is implemented in the code domain.

In this literature, there was proposed a method for generating plural orthogonal codes from one CAZAC sequence by repeatedly making a cyclic shift (Q sample) having the length of the maximum delay time or more of the assumed channel to the CAZAC sequence to produce plural sequence.

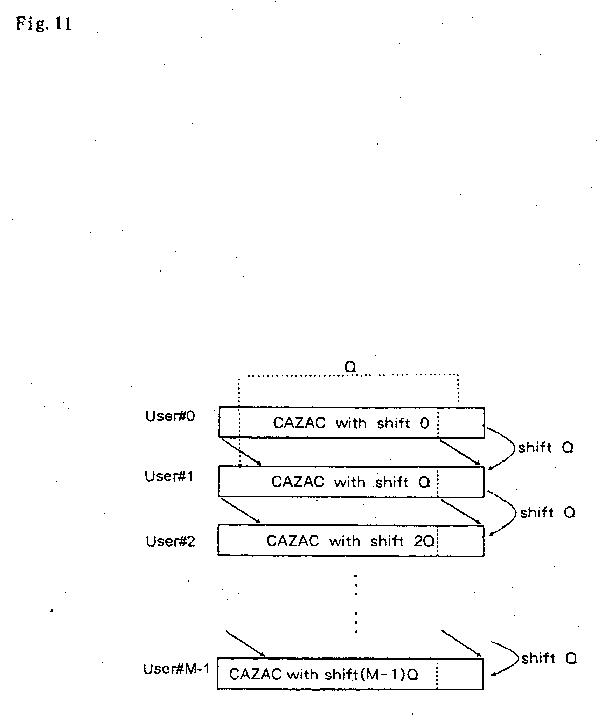

FIG. 11 is a view showing the generation of orthogonal codes for use in the CDM pilot multiplexing method. Referring to FIG. 11, the user #0 is allocated the CAZAC sequence with a cyclic shift amount of 0, the user #1 is allocated the CAZAC sequence with a cyclic shift amount of Q, and the user #2 is allocated the CAZAC sequence with a cyclic shift amount of 2Q.

With this method, the cyclic shift amount Q is set to the maximum delay time or more of the assumed propagation path, whereby the orthogonality of pilot signals for the users is also assured in the multi-path environment. The number of codes obtained from one CAZAC sequence by this method is roughly given by (pilot sequence length/cyclic shift amount). In an example of FIG. 11, M codes are obtained. And plural codes orthogonal to each other, which are generated in this manner, are allocated to the users to implement the orthogonality between users.

Also, in this literature, the number of users multiplexed can be further doubled by code multiplexing of SB#1 and SB#2 with an SF (Spreading Factor) of 2. That is, if the number of users multiplexed is U, U users are divided into former half U/2 users and latter half U/2 users, whereby the number of orthogonal users can be doubled by multiplying SB#1, SB#2 by {+1, +1} code for the former half U/2 users, and SB#1, SB#2 by {+1, -1} code for the latter half U/2 users.

The Hybrid method is a combination of the FDM pilot multiplexing method and the CDM pilot multiplexing method, and was proposed in "3GPP R1-061193, "Multiplexing Method for Orthogonal Reference Signal for E-UTRA Uplink", NTT DoCoMo".

In the Hybrid method, the users having different pilot transmission bandwidths are multiplexed by the FDM pilot multiplexing method, and the users having the same pilot transmission bandwidth are multiplexed by the CDM pilot multiplexing method. In this manner, the users having different pilot transmission bandwidths are multiplexed by properly using the FDM and the CDM, while the number of codes that can be secured at the same time can be increased over the FDM pilot multiplexing method.

(Second embodiment)

In a second embodiment, one example of the FDM pilot multiplexing is shown. The system configuration and the frame format in the second embodiment are the same as shown in the first embodiment.

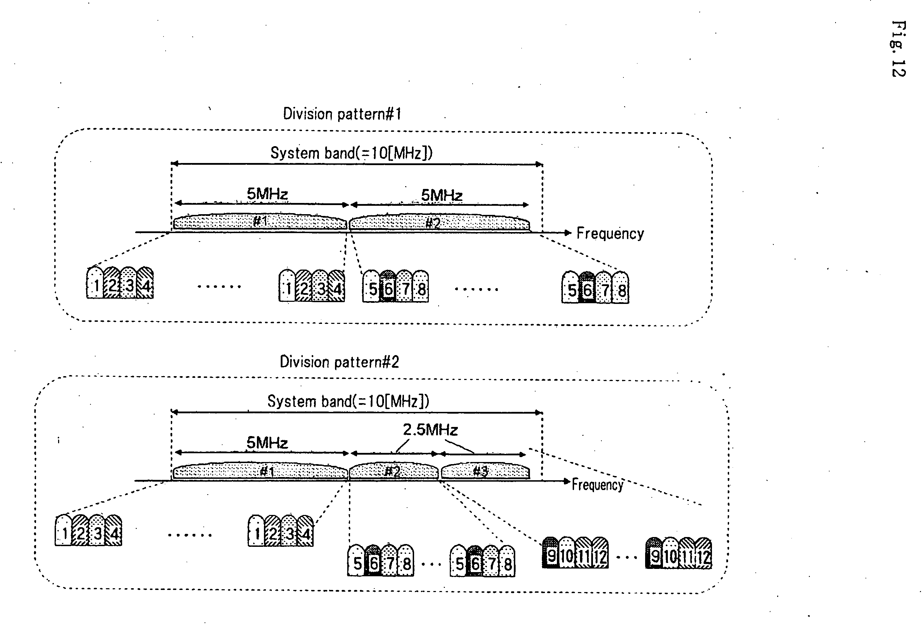

FIG. 12 is a view showing one example of predetermined division patterns in the second embodiment. In the second embodiment, it is assumed that two division patterns are determined beforehand in one example as shown in FIG. 12.

In division pattern #1, the system band of 10 MHz is equally divided into two bands #1 and #2 of 5 MHz. Further, each of bands #1 and #2 is divided into four groups like comb teeth. This is denoted as RPF (Repetition Factor)=4.

In division pattern #2, the system band of 10 MHz is divided into three bands #1, #2 and #3. Band #1 is 5 MHz and bands #2 and #3 are 2.5 MHz. Further, each of bands #1, #2 and #3 is divided into four groups like comb teeth with RPF=4, like pattern #1.

At the time of starting the operation of the base station, division pattern server 10 selects any one division pattern from division patterns #1, #2, and notifies the index of selected division pattern to all base stations 11, 12 belonging to the group of base stations to which the same division pattern is applied.

Each of notified base stations 11, 12 allocates the frequency to each mobile station (user), using the notified division pattern. For example, when division pattern #1 is selected, each of base stations 11, 12 divides the system band of 10 MHz into halves like division pattern #1, and further divides each band #1, #2 into four groups like comb teeth. And each of base stations 11, 12 allocates comb teeth 1 to 4 belonging to band #1 and comb teeth 5 to 8 belonging to band #2 within division pattern #1 to different mobile stations (users) making the band allocation request for every sub-frame. That is, the pilot transmission band is allocated to up to eight users for every sub-frame.

Herein, since comb teeth 1, 2, 3 and 4 are allocated to different mobile stations in band #1 of division pattern #1, four mobile stations can transmit the pilot signal. That is, the CQI measurement for four mobile stations is allowed. And if data transmission is permitted for the mobile station allocated comb tooth 1 in the scheduling based on the results of CQI measurement, for example, the mobile station only can transmit the data signal. Meanwhile, the mobile stations allocated comb teeth 2, 3 and 4 transmit the pilot signal only for CQI measurement or transmit the control signal and pilot signal only, but do not transmit the data signal.

Similarly, the mobile station only allocated comb tooth 1 may transmit the data signal, but the mobile stations allocated comb teeth 2, 3 and 4 may not transmit the data signal, but may transmit the control signal. In this case, the mobile stations allocated comb teeth 2, 3 and 4 may transmit the control signal in LB#1 (see FIG. 1). Also, this is the same with band #2 of division pattern #1.

In the second embodiment, like the first embodiment, it is unnecessary that the scheduling algorithm is particularly limited.

Also, in the second embodiment, like the first embodiment, the division patterns may be changed during operation of the system.

(Third embodiment)

In a third embodiment, another example of the FDM pilot multiplexing is shown. The system configuration and the frame format in the third embodiment are the same as shown in the first embodiment.

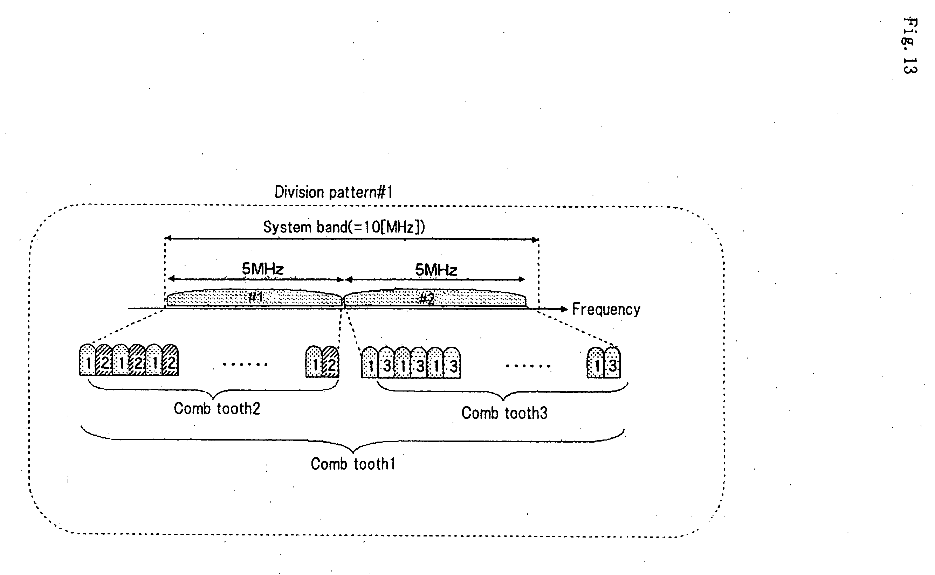

FIG. 13 is a view showing one example of predetermined division pattern in the third embodiment. In the third embodiment, it is assumed that one division pattern is determined beforehand in one example as shown in FIG. 13. Division pattern #1 is stored in each of base stations 11, 12.

In division pattern #1 of FIG. 13, the system band of 10 MHz has frequency divided like comb teeth with RPF=2. And comb tooth 1 spreads over the entire band of 10 MHz. Comb teeth 2, 3 spread over the band of 5 MHz. Comb tooth 2 spreads over band #1 of 5 MHz, and comb tooth 3 spreads over band #2 of 5 MHz.

At the time of starting the operation, each of base stations 11,12 allocates the frequency to each mobile station, using the division pattern #1. For example, in a certain sub-frame, comb tooth 1 is allocated to the mobile station making a band allocation request. The mobile station allocated comb tooth 1 transmits the pilot signal at the frequency of comb tooth 1 and transmits the data signal over 10 MHz.

Also, in the sub-frame, the mobile stations allocated other two comb teeth 2, 3 can transmit the pilot signal for CQI measurement over 5 MHz for bands #1, #2. Thereby, the CQI measurement for the mobile station that transmits the pilot signal is made, and the band allocation for data transmission in the subsequent sub-frame can be judged based on the results of CQI measurement.

In another example, conversely, in a certain sub-frame, comb teeth 2, 3 are allocated to different two mobile stations making the band allocation request. The two mobile stations allocated comb teeth 2, 3 transmit the pilot signal at the frequency of comb teeth 2, 3 and transmit the data signal over the allocated band of 5 MHz. Further, in the sub-frame, comb tooth 1 can be allocated to another mobile station. The mobile station allocated comb tooth 1 can transmit the pilot signal for COI measurement over the band of 10 MHz. Thereby, the CQI measurement for the mobile station that transmits the pilot signal is made, and the band allocation in the subsequent sub-frame can be judged based on the results of the CQI measurement.

In the third embodiment, like the first embodiment, it is unnecessary that the scheduling algorithm is particularly limited.

Also, in the third embodiment, like the first embodiment, plural division patterns may be prepared and changed during operation of the system.

(Fourth embodiment)

In a fourth embodiment, one example of the CDM pilot multiplexing is shown. The system configuration and the frame format in the fourth embodiment are the same as shown in the first embodiment.

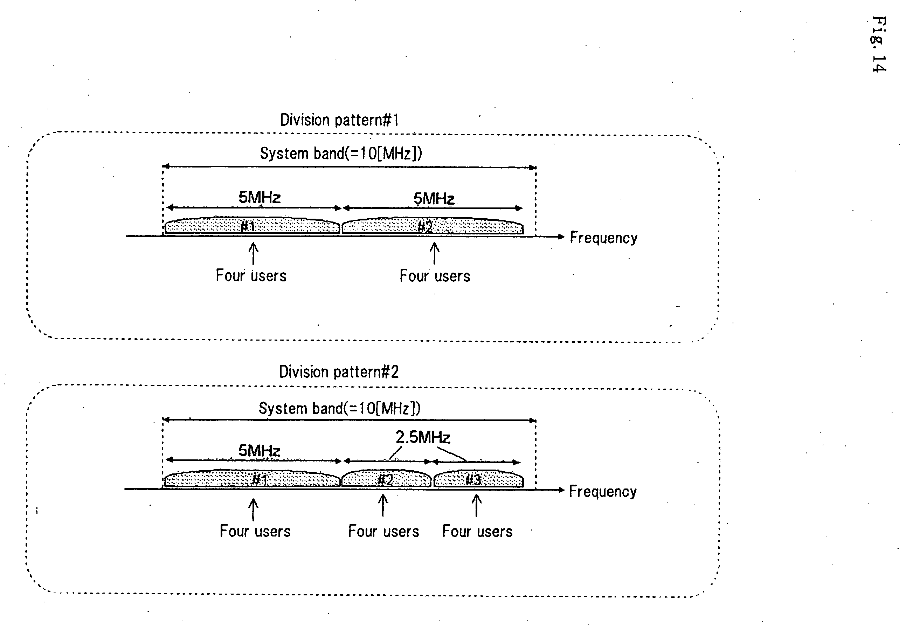

FIG. 14 is a view showing one example of predetermined division patterns in the fourth embodiment. In the fourth embodiment, it is assumed that two division patterns are determined beforehand in one example as shown in FIG. 14.

In division pattern #1, the system band of 10 MHz is divided into two bands #1 and #2 of 5 MHz. Also, in division pattern #2, the system band is divided into three bands #1, #2 and #3. Band #1 is 5 MHz, and bands #2, #3 are 2.5 MHz.

At the time of starting the operation of the base station, division pattern server 10 selects any one division pattern from two division patterns #1, #2, and notifies the index of selected division pattern to all base stations 11, 12 belonging to the group of base stations to which the same division pattern is applied.

Each of notified base stations 11, 12 allocates the frequency to each mobile station, using the dictated division pattern. For example, when division pattern #1 is selected, each of base stations 11, 12 divides the system band into halves like division pattern #1, and further allocates each band #1, #2 to four mobile stations. The four mobile stations (users) perform the code division multiplexing of pilot signals orthogonal in the code domain into the same frequency. That is, the pilot transmission band can be allocated to up to eight users for every sub-frame.

In the fourth embodiment, like the first embodiment, it is unnecessary that the scheduling algorithm is particularly limited.

Also, up to four mobile stations transmit the pilot signal in band #1 of division pattern #1 in the fourth embodiment, but only one mobile station of them transmits the data signal. That is, other three mobile stations transmit the pilot signal only for CQI measurement, or transmit the pilot signal and the control signal only. Base station 11, 12 makes the CQI measurement, using the pilot signals from four mobile stations, and makes the following scheduling, based on the measurement results.

Similarly, only one mobile station may transmit the data signal, and other three mobile stations may not transmit the data signal but may transmit the control signal. In this case, other three mobile stations may transmit the control signal in LB#1 (see FIG. 1). Also, this is the same with band #2 of division pattern #1.

Also, in the fourth embodiment, like the first embodiment, the division patterns may be changed during operation of the system.

(Fifth embodiment)

In a fifth embodiment, one example of the FDM/CDM Hybrid pilot multiplexing is shown. The system configuration and the frame format in the fifth embodiment are the same as shown in the first embodiment.

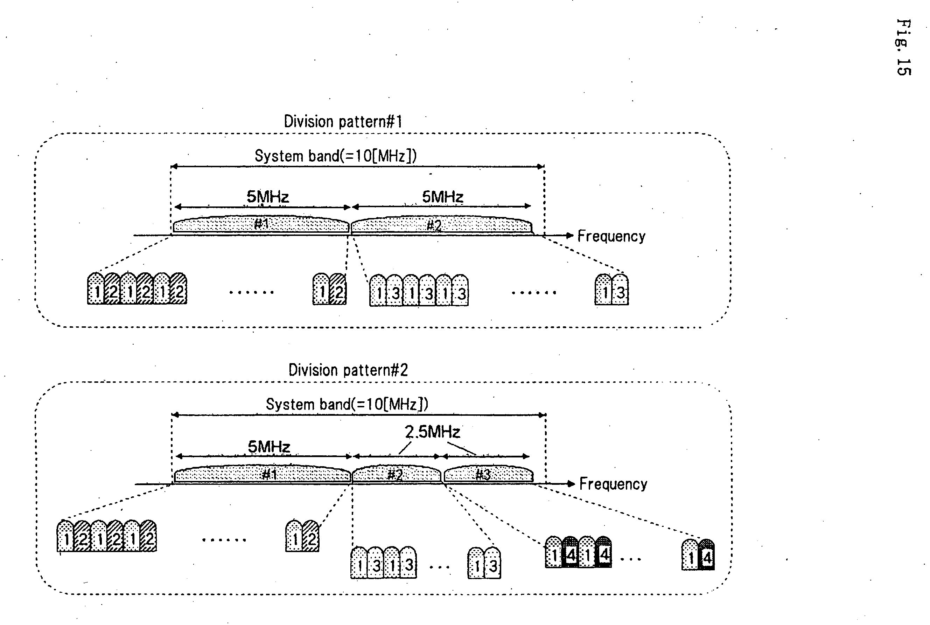

FIG. 15 is a view showing one example of predetermined division patterns in the fifth embodiment. In the fifth embodiment, it is assumed that two division patterns are determined beforehand in one example as shown in FIG. 15.

In division pattern #1, the system band of 10 MHz is divided into two bands #1 and #2 of 5 MHz. Further, each band #1, #2 of 5 MHz has frequency divided into two groups like the comb teeth with RPF=2. In FIG. 15, comb tooth 1 is for the band of 10 MHz and comb teeth 2, 3 are for the band of 5 MHz.

In division pattern #2, the system band is divided into three bands #1, #2 and #3. Band #1 is 5 MHz, and bands #2, #3 are 2.5 MHz. Further, each band #1, #2 and #3 is divided into two groups like the comb teeth with RPF=2, like division pattern #1. In FIG. 15, comb tooth 1 is for the band of 10 MHz, and comb tooth 2 is for the band of 5 MHz, and comb teeth 3, 4 are for the band of 2.5 MHz.

At the time of starting the operation of the base station, division pattern server 10 selects any one division pattern from two division patterns #1, #2, and notifies the index of selected division pattern to all base stations 11,12 belonging to the group of base stations to which the same division pattern is applied.

Each of notified base stations 11, 12 allocates the frequency to each mobile station, using the notified division pattern. For example, when division pattern #1 is selected, each of base stations 11, 12 can allocate comb teeth 1, 2 and 3 to plural mobile stations for every sub-frame. For example, comb tooth 1 is allocated to different two mobile stations, comb tooth 2 is allocated to different two mobile stations, and comb tooth 3 is allocated to different two mobile stations. The mobile stations allocated the same comb tooth perform the code division multiplexing of pilot signals orthogonal in the code area into the same frequency.

The mobile stations having different allocated bands perform the FDM multiplexing, while the mobile stations allocated the same transmission band perform the CDM multiplexing.

In the system with the division patterns as shown in FIG. 15, it is possible to suppress the interference between cells within all the divided bands in a situation where the same division pattern is given to the base stations in the predetermined range and plural mobile stations use the system band by frequency division multiplexing.

In the fifth embodiment, like the first embodiment, it is unnecessary that the scheduling algorithm is particularly limited.

Also, in the fifth embodiment, like the first embodiment, plural division patterns may be prepared and changed during operation of the system.

While preferred embodiments of the present invention have been described using specific terms, such description is for illustrative purposes only, and it is to be understood that changes and variations may be made without departing from the scope of the following claims.

**Claims**

1. A band allocation method for dividing and allocating a system band of each cell to a plurality of mobile stations in a radio communication system for covering a service area with a plurality of cells, comprising:

   setting the same division pattern indicating a pattern of dividing said system band to a plurality of base stations each constructing a cell of a plurality of cells belonging to a predetermined area; and
   dividing said system band into two or more bands, using said set division pattern at each of said plurality of base stations, and allocating a band of said two or more bands as a pilot transmission frequency band to a mobile station accommodated in the cell constructed by said base station.

2. The band allocation method according to claim 1, further comprising collecting information of the division pattern desired by said plurality of base stations belonging to said predetermined area, and deciding the division pattern applied to said predetermined area based on said collected information.

3. The band allocation method according to claim 1 or 2, further comprising determining beforehand a plurality of division pattern candidates, and applying commonly a selected division pattern from the candidates to said plurality of base stations belonging to said predetermined area.

4. The band allocation method according to any of claim 1 to 3, wherein the pilot signals transmitted at the same timing and at the same frequency are pilot sequences having the same sequence length.

5. The band allocation method according to any of claims 1 to 4, further comprising allocating the bands into which said system band is divided to a plurality of mobile stations for pilot signal transmission at said base station, and permitting any of said plurality of mobile stations to transmit a data signal in said band, based on the reception quality of the pilot signal from said plurality of mobile stations to which said bands are allocated for pilot signal transmission.

6. The band allocation method according to claim 5, further comprising allocating the bands into which said system band is divided to the plurality of mobile stations by frequency division multiplexing for pilot signal transmission at said base station.

7. The band allocation method according to claim 5, further comprising allocating the bands into which said system band is divided to the plurality of mobile stations by code division multiplexing for pilot signal transmission at said base station.

8. The band allocation method according to claim 5, further comprising allocating the bands into which said system band is divided to the plurality of mobile stations by a hybrid of frequency division multiplexing and code division multiplexing for pilot signal transmission at said base station.

9. A radio communication system arranged to cover a service area with a plurality of cells to and divide to and allocate a system band of each cell to a plurality of mobile stations, wherein the system is arranged to set the same division pattern indicating a pattern of dividing said system band to a plurality of base stations (11,12) each constructing a cell of a plurality of cells (13,14) belonging to a predetermined area, to divide said system band into two or more bands to use said set division pattern at each of said plurality of base stations, and to allocate a band of said two or more bands as a pilot transmission frequency band to a mobile station accommodated in the cell constructed by said base station.

10. The radio communication system according to claim 9, comprising:

    a division pattern server (10) arranged to decide a division pattern indicating a pattern of dividing said system band to be applied commonly to a predetermined area to which a plurality of cells belong; and
    said plurality of base stations each arranged to divide said system band into two or more bands, using said division pattern decided by said division pattern server, and to allocate a band of said two or more bands as a pilot transmission frequency band to a mobile station accommodated in the cell constructed by said base station.

11. The radio communication system according to claim 10, wherein said division pattern server is arranged to collect information of the division pattern desired by said plurality of base stations belonging to said predetermined area, and to decide the division pattern applied to said predetermined area based on said collected information.

12. The radio communication system according to claim 10, wherein said division pattern server is arranged to determine beforehand a plurality of division pattern candidates, and to apply commonly a selected division pattern from the candidates to said plurality of base stations belonging to said predetermined area.

13. The radio communication system according to claim 9 or 10, wherein the pilot signals transmitted at the same timing and at the same frequency are pilot sequence having the same sequence length.

14. The radio communication system according to claim 9 or 10, wherein said base station is arranged to allocate the bands into which said system band is divided to a plurality of mobile stations for pilot signal transmission, and to permit any of said plurality of mobile stations to transmit a data signal in said band, based on the reception quality of the pilot signal from said plurality of mobile stations to which said bands are allocated for pilot signal transmission.

15. The radio communication system according to claim 14, wherein said base station is arranged to allocate the bands into which said system band is divided to the plurality of mobile stations by frequency division multiplexing for pilot signal transmission.

16. The radio communication system according to claim 14, wherein said base station is arranged to allocate the bands into which said system band is divided to the plurality of mobile stations by code division multiplexing for pilot signal transmission.

17. The radio communication system according to claim 14, wherein said base station is arranged to allocate the bands into which said system band is divided to the plurality of mobile stations by a hybrid of frequency division multiplexing and code division multiplexing for pilot signal transmission at said base station.


**Patentansprüche**

1. Bandzuordnungsverfahren zum Unterteilen und Zuordnen eines Systembands jeder Zelle zu mehreren Mobilstationen in einem Funkkommunikationssystem, um einen Dienstbereich mit mehreren Zellen abzudecken, welches folgende Schritte aufweist:

    Festlegen des gleichen Unterteilungsmusters, welches ein Muster zum Unterteilen des Systembands angibt, für mehrere Basisstationen, die jeweils eine von mehreren zu einem vorbestimmten Bereich gehörenden Zellen bilden, und
    Unterteilen des Systembands in zwei oder mehr Bänder unter Verwendung des an jeder der mehreren Basisstationen festgelegten Unterteilungsmusters und Zuordnen eines Bands von den zwei oder mehr Bändern als ein Pilotübertragungsfrequenzband zu einer Mobilstation, die sich in der von der Basisstation gebildeten Zelle befindet.

2. Bandzuordnungsverfahren nach Anspruch 1, bei dem ferner Informationen über das von den mehreren zu dem vorbestimmten Bereich gehörenden Basisstationen gewünschte Unterteilungsmuster gesammelt werden und das auf den vorbestimmten Bereich angewendete Unterteilungsmuster auf der Grundlage der gesammelten Informationen festgelegt wird.

3. Bandzuordnungsverfahren nach Anspruch 1 oder 2, bei dem ferner vorab mehrere Unterteilungsmusterkandidaten festgelegt werden und ein aus den Kandidaten ausgewähltes Unterteilungsmuster gemeinsam auf die mehreren zu dem vorbestimmten Bereich gehörenden Basisstationen angewendet wird.

4. Bandzuordnungsverfahren nach einem der Ansprüche 1 bis 3, wobei die zur gleichen Zeit und bei der gleichen Frequenz übertragenen Pilotsignale Pilotsequenzen mit der gleichen Sequenzlänge sind.

5. Bandzuordnungsverfahren nach einem der Ansprüche 1 bis 4, bei dem ferner die Bänder, in die das Systemband unterteilt ist, mehreren Mobilstationen zur Pilotsignalübertragung an der Basisstation zugeordnet werden und auf der Grundlage der Empfangsqualität des Pilotsignals von den mehreren Mobilstationen, denen die Bänder für die Pilotsignalübertragung zugeordnet sind, einer beliebigen der mehreren Mobilstationen gestattet wird, ein Datensignal in dem Band zu übertragen.

6. Bandzuordnungsverfahren nach Anspruch 5, bei dem ferner die Bänder, in die das Systemband unterteilt ist, den mehreren Mobilstationen durch Frequenzmultiplexierung zur Pilotsignalübertragung an der Basisstation zugeordnet werden.

7. Bandzuordnungsverfahren nach Anspruch 5, bei dem ferner die Bänder, in die das Systemband unterteilt ist, den mehreren Mobilstationen durch Codemultiplexierung zur Pilotsignalübertragung an der Basisstation zugeordnet werden.

8. Bandzuordnungsverfahren nach Anspruch 5, bei dem ferner die Bänder, in die das Systemband unterteilt ist, den mehreren Mobilstationen durch einen Hybrid aus der Frequenzmultiplexierung und der Codemultiplexierung zur Pilotsignalübertragung an der Basisstation zugeordnet werden.

9. Funkkommunikationssystem, das dafür eingerichtet ist, einen Dienstbereich mit mehreren Zellen abzudecken und ein Systemband jeder Zelle zu unterteilen und mehreren Mobilstationen zuzuordnen, wobei das System dafür eingerichtet ist, das gleiche Unterteilungsmuster, das ein Muster zum Unterteilen des Systembands angibt, für mehrere Basisstationen (11, 12) festzulegen, die jeweils eine von mehreren zu einem vorbestimmten Bereich gehörenden Zellen (13, 14) bilden, das Systemband in zwei oder mehr Bänder zu unterteilen, das festgelegte Unterteilungsmuster an jeder der mehreren Basisstationen zu verwenden und ein Band von den zwei oder mehr Bändern als ein Pilotübertragungsfrequenzband einer Mobilstation zuzuordnen, die sich in der von der Basisstation gebildeten Zelle befindet.

**10.** Funkkommunikationssystem nach Anspruch 9, welches aufweist:

einen Unterteilungsmusterserver (10), der dafür eingerichtet ist, ein Unterteilungsmuster festzulegen, das ein gemeinsam auf einen vorbestimmten Bereich, zu dem mehrere Zellen gehören, anzuwendendes Muster zum Unterteilen des Systembands angibt, und
wobei die mehreren Basisstationen jeweils dafür eingerichtet sind, das Systemband unter Verwendung des von dem Unterteilungsmusterserver festgelegten Unterteilungsmusters in zwei oder mehr Bänder zu unterteilen und ein Band von den zwei oder mehr Bändern als ein Pilotübertragungsfrequenzband einer Mobilstation zuzuordnen, die sich in der durch die Basisstation gebildeten Zelle befindet.

**11.** Funkkommunikationssystem nach Anspruch 10, wobei der Unterteilungsmusterserver dafür eingerichtet ist, Informationen zu dem von den mehreren zu dem vorbestimmten Bereich gehörenden Basisstationen gewünschten Unterteilungsmuster zu sammeln und das auf den vorbestimmten Bereich angewendete Unterteilungsmuster auf der Grundlage der gesammelten Informationen festzulegen.

**12.** Funkkommunikationssystem nach Anspruch 10, wobei der Unterteilungsmusterserver dafür eingerichtet ist, vorab mehrere Unterteilungsmusterkandidaten festzulegen und ein aus den Kandidaten ausgewähltes Unterteilungsmuster gemeinsam auf die mehreren zu dem vorbestimmten Bereich gehörenden Basisstationen anzuwenden.

**13.** Funkkommunikationssystem nach Anspruch 9 oder 10, wobei die zur gleichen Zeit und bei der gleichen Frequenz übertragenen Pilotsignale Pilotsequenzen mit der gleichen Sequenzlänge sind.

**14.** Funkkommunikationssystem nach Anspruch 9 oder 10, wobei die Basisstation dafür eingerichtet ist, die Bänder, in die das Systemband unterteilt ist, mehreren Mobilstationen zur Pilotsignalübertragung zuzuordnen und es auf der Grundlage der Empfangsqualität des Pilotsignals von den mehreren Mobilstationen, denen die Bänder für die Pilotsignalübertragung zugeordnet sind, einer beliebigen der mehreren Mobilstationen zu gestatten, ein Datensignal in dem Band zu übertragen.

**15.** Funkkommunikationssystem nach Anspruch 14, wobei die Basisstation dafür eingerichtet ist, die Bänder, in die das Systemband unterteilt ist, den mehreren Mobilstationen durch Frequenzmultiplexierung zur Pilotsignalübertragung zuzuordnen.

**16.** Funkkommunikationssystem nach Anspruch 14, wobei die Basisstation dafür eingerichtet ist, die Bänder, in die das Systemband unterteilt ist, den mehreren Mobilstationen durch Codemultiplexierung zur Pilotsignalübertragung zuzuordnen.

**17.** Funkkommunikationssystem nach Anspruch 14, wobei die Basisstation dafür eingerichtet ist, die Bänder, in die das Systemband unterteilt ist, den mehreren Mobilstationen durch einen Hybrid aus der Frequenzmultiplexierung und der Codemultiplexierung zur Pilotsignalübertragung an der Basisstation zuzuordnen.

**Revendications**

**1.** Procédé d'attribution de bande permettant de répartir et d'attribuer une bande de système de chaque cellule à une pluralité de stations mobiles dans un système de radiocommunication destiné à couvrir une zone de service avec une pluralité de cellules, comprenant les étapes consistant à :

établir le même motif de répartition indiquant un motif de répartition de ladite bande de système en une pluralité de stations de base construisant chacune une cellule d'une pluralité de cellules appartenant à une zone prédéterminée ; et

répartir ladite bande de système en deux bandes ou plus, en utilisant ledit motif de répartition établi au niveau de chacune de ladite pluralité de stations de base, et attribuer une bande desdites deux bandes ou plus en tant que bande de fréquence de transmission pilote à une station mobile logée dans la cellule construite par ladite station de base.

2. Procédé d'attribution de bande selon la revendication 1, comprenant en outre les étapes consistant à collecter des informations sur le motif de répartition souhaité par ladite pluralité de stations de base appartenant à ladite zone prédéterminée, et décider du motif de répartition appliqué à ladite zone prédéterminée en se basant sur lesdites informations collectées.

3. Procédé d'attribution de bande selon la revendication 1 ou 2, comprenant en outre les étapes consistant à déterminer au préalable une pluralité de motifs de répartition candidats, et appliquer communément un motif de répartition sélectionné parmi les candidats de ladite pluralité de stations de base appartenant à ladite zone prédéterminée.

4. Procédé d'attribution de bande selon l'une quelconque des revendications 1 à 3, dans lequel les signaux pilotes transmis au même moment et à la même fréquence sont des séquences pilotes ayant la même longueur de séquence.

5. Procédé d'attribution de bande selon l'une quelconque des revendications 1 à 4, comprenant en outre les étapes consistant à attribuer les bandes dans lesquelles ladite bande de système est répartie en une pluralité de stations mobiles pour une transmission de signal pilote au niveau de ladite station de base, et permettre à l'une quelconque de ladite pluralité de stations de base de transmettre un signal de données dans ladite bande, en se basant sur la qualité de réception du signal pilote provenant de ladite pluralité de stations de base auxquelles lesdites bandes sont attribuées pour une transmission de signal pilote.

6. Procédé d'attribution de bande selon la revendication 5, comprenant en outre l'étape consistant à attribuer les bandes dans lesquelles ladite bande de système est répartie en la pluralité de stations mobiles par multiplexage par répartition en fréquence pour une transmission de signal pilote au niveau de ladite station de base.

7. Procédé d'attribution de bande selon la revendication 5, comprenant en outre l'étape consistant à attribuer les bandes dans lesquelles ladite bande de système est répartie en la pluralité de stations mobiles par multiplexage par répartition en code pour une transmission de signal pilote au niveau de ladite station de base.

8. Procédé d'attribution de bande selon la revendication 5, comprenant en outre l'étape consistant à attribuer les bandes dans lesquelles ladite bande de système est répartie en la pluralité de stations mobiles par un hybride entre le multiplexage par répartition en fréquence et le multiplexage par répartition en code pour une transmission de signal pilote au niveau de ladite station de base.

9. Système de radiocommunication agencé pour couvrir une zone de service avec une pluralité de cellules et pour répartir et attribuer une bande de système de chaque cellule à une pluralité de stations mobiles, où le système est agencé pour établir le même motif de répartition indiquant un motif de répartition de ladite bande de système en une pluralité de stations de base (11, 12), construisant chacune une cellule d'une pluralité de cellules (13, 14) appartenant à une zone prédéterminée, pour répartir ladite bande de système en deux bandes ou plus, pour utiliser ledit motif de répartition établi au niveau de chacune de ladite pluralité de stations de base, et pour attribuer une bande desdites deux bandes ou plus en tant que bande de fréquence de transmission pilote à la station mobile logée dans la cellule construite par ladite station de base.

10. Système de radiocommunication selon la revendication 9, comprenant :

un serveur de motif de répartition (10) agencé pour décider d'un motif de répartition indiquant un motif de répartition de ladite bande de système à appliquer communément à une zone prédéterminée à laquelle une pluralité de cellules appartiennent ; et
les stations de base de ladite pluralité de stations de base étant chacune agencées pour diviser ladite bande de système en deux bandes ou plus, en utilisant ledit motif de répartition décidé par ledit serveur de motif de répartition, et pour attribuer une bande desdites deux bandes ou plus en tant que bande de fréquence de transmission pilote à une station mobile logée dans la cellule construite par ladite station de base.

11. Système de radiocommunication selon la revendication 10, dans lequel ledit serveur de motif de répartition est agencé pour collecter des informations du motif de répartition souhaité par ladite pluralité de stations de base appartenant à ladite zone prédéterminée, et pour décider du motif de répartition appliqué à ladite zone prédéterminée en se basant sur lesdites informations collectées.

**12.** Système de radiocommunication selon la revendication 10, dans lequel ledit serveur de motif de répartition est agencé pour déterminer au préalable une pluralité de motifs de répartition candidats, et pour appliquer communément un motif de répartition sélectionné à partir des candidats à ladite pluralité de stations de base appartenant à ladite zone prédéterminée.

**13.** Système de radiocommunication selon la revendication 9 ou 10, dans lequel les signaux pilotes transmis au même moment et à la même fréquence sont une séquence pilote ayant la même longueur de séquence.

**14.** Système de radiocommunication selon la revendication 9 ou 10, dans lequel ladite station de base est agencée pour attribuer des bandes dans lesquelles ladite bande de système est répartie en une pluralité de stations mobiles pour une transmission de signal pilote, et pour permettre à l'une quelconque de ladite pluralité de stations mobiles de transmettre un signal donné dans ladite bande, en se basant sur la qualité de réception du signal pilote de ladite pluralité de stations mobiles auxquelles lesdites bandes sont attribuées pour une transmission de signal pilote.

**15.** Système de radiocommunication selon la revendication 14, dans lequel ladite station de base est agencée pour attribuer des bandes dans lesquelles ladite bande de système est répartie en la pluralité de stations mobiles par multiplexage par répartition en fréquence pour une transmission de signal pilote.

**16.** Système de radiocommunication selon la revendication 14, dans lequel ladite station de base est agencée pour attribuer des bandes dans lesquelles ladite bande de système est répartie en la pluralité de stations mobiles par multiplexage par répartition en code pour une transmission de signal pilote.

**17.** Système de radiocommunication selon la revendication 14, dans lequel ladite station de base est agencée pour attribuer des bandes dans lesquelles ladite bande de système est répartie en la pluralité de stations mobiles par un hybride entre le multiplexage par répartition en fréquence et le multiplexage par répartition en code pour une transmission de signal pilote au niveau de ladite station de base.

Fig. 1

One sub-frame=0.5[ms]

Fig. 2

Fig. 3

Fig. 4

Cell #1

Base station #1

Mobile station #1

Cell #2

Cell #3

Base station #2

Base station #3

Mobile station #3

Mobile station #2

EP 1 871 124 B1

Fig. 5

Fig.6

Fig. 7

EP 1 871 124 B1

Fig. 8

Fig. 9

Fig. 10

Fig. 11

Fig. 12

Fig. 13

Fig. 14

Fig. 15

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20050233752 A

### Non-patent literature cited in the description

- **K. FAZEL ; S. KEISER.** Multi-Carrier and Spread Spectrum Systems. John Willey and Sons, 2003

- **L. Huang et al.** Channel Estimation Based on Delay-Subspace Filter for Uplink of CDM-OFDMA System. *International Symposium on Microwave, Antenna, Propagation and EMC Technologies for Wireless Communications Proceedings,* 2005, 1415-1418